# EUROPÄISCHE PATENTANMELDUNG

(11) **EP 4 549 710 A1**
(43) Veröffentlichungstag der Anmeldung: **07.05.2025**
(21) Anmeldenummer: 24208189.1
(22) Anmeldetag: 22.10.2024
(51) Int. Cl.: F01N 3/20, F16L 43/00, F16L 9/22

(54) **KRAFTFAHRZEUGROHRLEITUNGSELEMENT FÜR FLÜSSIGKEITSLEITUNGEN**

(30) Priorität: 31.10.2023 DE 102023130098
(71) Anmelder: AT-Tec Attendorner Tube-Tec GmbH, 57439 Attendorn (DE)
(72) Erfinder: Ostermann, Thomas, 57439 Attendorn (DE)
(74) Vertreter: Kalkoff & Partner Patentanwälte mbB

(57) **Zusammenfassung**

Kraftfahrzeugrohrleitungselement für Flüssigkeitsleitungen, insbesondere zur Durchleitung von Reduktionsmitteln in einen Kraftfahrzeugsabgastrakt, mit
- einem sich von einer Einlassöffnung (3) bis zu einer Auslassöffnung (4) erstreckenden Außenrohr (2),
- einem innerhalb des Außenrohrs (2) angeordneten, sich von einer Eintrittsöffnung (6) bis zu einer im Abstand von der Auslassöffnung (4) angeordneten Austrittsöffnung (₇ ) erstreckenden Innenrohrkörper (5) und
- einem sich über einen Bereich des Innenrohrkörpers (5) und des Außenrohrs (2) erstreckenden Biegeabschnitt (8),wobei der Innenrohrkörper (5) in Längsachsenrichtung im Bereich des Biegeabschnitts (8) mehrteilig ausgebildet ist.

## Beschreibung

Die Erfindung betrifft ein Kraftfahrzeugrohrleitungselement für Flüssigkeitsleitungen, insbesondere zur Durchleitung von Reduktionsmitteln in einen Kraftfahrzeugsabgastrakt, mit
- einem sich von einer Einlassöffnung bis zu einer Auslassöffnung erstreckenden Außenrohr,
- einem innerhalb des Außenrohrs angeordneten, sich von einer Eintrittsöffnung bis zu einer im Abstand von der Auslassöffnung angeordneten Austrittsöffnung erstreckenden Innenrohrkörper und
- einem sich über einen Bereich des Innenrohrkörpers und des Außenrohres erstreckenden Biegeabschnitt.

Kraftfahrzeugrohrleitungselemente der eingangs genannten Art werden bspw. im Kraftfahrzeugbereich dazu verwendet, um einen mit einem Reduktionsmittel, bspw. einem Harnstoff wie AdBlue gefüllten Flüssigkeitsspeicher mit einer Zuführeinheit zu verbinden, die dazu ausgebildet ist, einen Kraftfahrzeugabgastrakt bedarfsweise mit dem Harnstoff zu versorgen. Das Kraftfahrzeugrohrleitungselement als Bestandteil einer Flüssigkeitsleitung bietet dann bspw. die Möglichkeit zur Anordnung eines zuführenden Schlauchs und ist darüber hinaus zur Verbindung mit einem Kraftfahrzeugabgastrakt ausgebildet. Darüber hinaus kann das Kraftfahrzeugrohrleitungselement jedoch auch in beliebigen anderen flüssigkeitsführenden Systemen eines Kraftfahrzeugs als Bestandteil der Flüssigkeitsleitungen eingesetzt werden.

Bei den bekannten Kraftfahrzeugrohrleitungselementen wird sowohl das Strömungsverhalten wie auch der Volumenstrom durch den Innenquerschnitt des Kraftfahrzeugrohrleitungselements festgelegt. Das sich durch den Innenquerschnitt ergebende Volumen bestimmt im Falle der Verwendung des Kraftfahrzeugrohrleitungselements zur Zuführung von Reduktionsmitteln im Kraftfahrzeug auch, wie viel Reduktionsmittel nach einem Abschaltvorgang in dem Kraftfahrzeugrohrleitungselement verbleibt. Das in dem Kraftfahrzeugrohrleitungselement verbleibende Reduktionsmittel muss, um eine gewünschte Schadstoffreduzierung im Abgastrakt zu erreichen und um eine definierte Einbringung des Reduktionsmittels in den Abgastrakt während des Betriebs des Kraftfahrzeugs zu gewährleisten, nach der Abschaltung des Kraftfahrzeugs aus dem Kraftfahrzeugrohrleitungselement abgesaugt werden. Ein zu großes, sich durch den Innenquerschnitt des Kraftfahrzeugrohrleitungselements ergebendes Volumen macht den Einsatz entsprechend leistungsstarker Pumpen erforderlich, um eine vollständige Absaugung des Reduktionsmittels zu gewährleisten. Ein zu geringer Innenquerschnitt des Kraftfahrzeugrohrleitungselements kann wiederum dazu führen, dass im Bedarfsfall keine ausreichende Menge von Reduktionsmitteln in den Kraftfahrzeugabgastrakt abgegeben wird.

Aus dem Stand der Technik ist es zur Lösung dieses Problems bereits bekannt, ein Kraftfahrzeugrohrleitungselement durch ein Außenrohr und ein Innenrohr mit einem gegenüber dem Außenrohr reduzierten Innenquerschnitt zu bilden. Das Kraftfahrzeugrohrleitungselement weist dann einen Verbindungsabschnitt auf, welche den Abschnitt des Außenrohres bezeichnet, über den sich ein in dem Außenrohr angeordneter Innenrohrkörper erstreckt. An den Verbindungsabschnitt schließt sich in Längsachsenrichtung ein Pufferabschnitt an, bei dem es sich um den Bereich des Kraftfahrzeugrohrleitungselements handelt, welcher in Längsachsenrichtung des Außenrohres betrachtet, nicht von dem Innenrohrkörper überdeckt ist. Dies wird dabei dadurch erreicht, dass der Innenrohrkörper kürzer ist als das Außenrohr.

Aufgrund der Anordnung des Innenrohrkörpers im Inneren des Außenrohres bestimmt der Innenrohrkörper den Strömungskanal entlang des Verbindungsabschnitts, wobei durch den Innenrohrkörper der Querschnitt des Strömungskanals - senkrecht zur Längsachse betrachtet - im Bereich des Verbindungsabschnitts kleiner ist als der entsprechende durch das Außenrohr bestimmte Querschnitt im Bereich des Pufferabschnitts, der sich stirnseitig an den Innenrohrkörper anschließt.

Durch die bekannte Ausgestaltung der Kraftfahrzeugrohrleitungselemente wird eine Reduzierung des durch das Außenrohr bereitgestellten Innenvolumens des Kraftfahrzeugrohrleitungselements durch Einbringen des Innenrohrkörpers in das Außenrohr bewirkt, wobei gleichzeitig durch eine Beibehaltung des Innenquerschnitts des Außenrohrs im Bereich des Pufferabschnitts ein ausreichend großer Speicherraum geschaffen wird, welcher zur Vorhaltung einer im Bedarf erforderlichen Flüssigkeitsmenge, bspw. eines Reduktionsmittels, geeignet ist.

Die Herstellung eines Kraftfahrzeugrohrleitungselements bedingt somit die Anordnung eines Innenrohrkörpers innerhalb eines Außenrohres. Aufgrund der räumlichen Gegebenheiten an einem Kraftfahrzeug ist es überwiegend erforderlich, dass das Kraftfahrzeugrohrleitungselement in seinem Bereich zwischen der Einlassöffnung und der Auslassöffnung des Außenrohres eine Biegung aufweist. Eine solche Biegung kann dabei nur nach erfolgter Anordnung des Innenrohres innerhalb des Außenrohres erfolgen, welche gemeinsam bei der Herstellung eines Biegeabschnitts eine entsprechende Verformung erfahren. Im Falle der Herstellung eines Biegeabschnitts mit einem in dem Außenrohr angeordneten Innenrohrkörper resultiert aus deren Zusammenwirkung bei der Herstellung des Biegeabschnitts eine Beulenbildung am Außenrohr sowie eine partielle Reduzierung der Wandstärke des Außenrohres, welche im Betrieb des Kraftfahrzeugrohrleitungselements eine Rissbildung begünstigen, in deren Folge es zu einem Versagen des Kraftfahrzeugrohrleitungselements kommen kann.

Hiervon ausgehend liegt der Erfindung die Aufgabe zugrunde, ein Kraftfahrzeugrohrleitungselement der eingangs genannten Art mit einem Biegeabschnitt bereitzustellen, welches einen zuverlässigen Einsatz ermöglicht.

Die Erfindung löst die Aufgabe durch ein Kraftfahrzeugrohrleitungselement mit den Merkmalen des Anspruchs 1. Vorteilhafte Weiterbildungen der Erfindung sind in den abhängigen Ansprüchen angegeben.

Kennzeichnend für das erfindungsgemäße Kraftfahrzeugrohrleitungselement ist, dass der Innenrohrkörper in Längsachsenrichtung im Bereich des Biegeabschnitts mehrteilig ausgebildet ist. Die erfindungsgemäße Ausgestaltung des Kraftfahrzeugrohrleitungselements sieht demnach vor, dass der im Inneren des Außenrohres angeordnete Innenrohrkörper nicht durch ein durchgehendes Rohrelement, sondern aus mindestens zwei voneinander getrennten Rohrkörperelementen gebildet ist, welche zumindest abschnittsweise im Bereich des Biegeabschnitts angeordnet sind. Gemäß der erfindungsgemäßen Ausgestaltung erstreckt sich somit der Innenrohrkörper nicht durchgängig über den Bereich des Biegeabschnitts des Kraftfahrzeugrohrleitungselements, sondern ist im Bereich des Biegeabschnitts unterbrochen.

Die erfindungsgemäße Ausgestaltung des Kraftfahrzeugrohrelements mit einem mindestens zweiteiligen Innenrohrkörper ermöglicht es, das Kraftfahrzeugrohrleitungselement nach einer Anordnung des mindestens zwei Rohrkörperelemente aufweisenden Innenrohrkörpers mit einem gewünschten Biegeabschnitt im Bereich der beiden Rohrkörperelemente zu versehen, ohne dass es hierbei zu einer strukturellen Schwächung des Außenrohres in Form von Ausbeulungen oder Verjüngungen des Außenrohres kommt, welche eine Rissbildung begünstigen und zu einem Versagen des Kraftfahrzeugrohrleitungselements führen können. Die erfindungsgemäße Aufteilung des Innenrohrkörpers in mindestens zwei Rohrkörperelemente gewährleistet dabei gegenüber den aus dem Stand der Technik bekannten einteiligen Innenrohrkörpern, dass es im Rahmen der Herstellung des Biegeabschnitts bei einer Biegung des Kraftfahrzeugrohrleitungselements nicht zu von dem Innenrohrkörper auf den Außenrohrkörper wirkenden schädigenden Einflüssen kommt.

Das erfindungsgemäße Kraftfahrzeugrohrleitungselement zeichnet sich somit dadurch aus, dass unter einer abschnittsweisen Beibehaltung des Innenquerschnitts des Außenrohres zur Bildung eines Pufferabschnitts und einer das Innenvolumen reduzierenden Verwendung eines Innenrohrkörpers das Kraftfahrzeugrohrleitungselement auch bei der Herstellung eines Biegeabschnitts eine ausreichende Stabilität aufweist. Einem Versagen des Kraftfahrzeugrohrleitungselements im Betrieb aufgrund von strukturellen Schwächungen im Bereich des Biegeabschnitts wird somit wirksam vorgebeugt.

Die Anzahl der den Innenrohrkörper bildenden Rohrkörperelemente ist grundsätzlich frei wählbar, sodass eine optimale Anpassung des Innenrohrkörpers an einem oder auch mehreren herzustellenden Biegeabschnitten des Kraftfahrzeugrohrleitungselements möglich ist. Nach einer besonders vorteilhaften Ausgestaltung der Erfindung ist vorgesehen, dass der Innenrohrkörper ein erstes Rohrkörperelement und ein zweites Rohrkörperelement aufweist, die im Biegeabschnitt abschnittsweise beabstandet zueinander angeordnet sind.

Gemäß dieser Ausgestaltung der Erfindung weist der Innenrohrkörper zwei Rohrkörperelemente auf, die nach der Erzeugung einer Biegung des Kraftfahrzeugrohrleitungselements mit einander zugewandten Stirnflächen im Bereich des Biegeabschnitts angeordnet sind. Durch diese Ausgestaltung der Erfindung wird in besonders zuverlässiger Weise gewährleistet, dass die Rohrkörperelemente bei der Herstellung des Biegeabschnittes keine die Struktur des Kraftfahrzeugrohrleitungselements schwächende Auswirkungen auf das Außenrohr ausüben. Entsprechende negative Einflüsse werden dadurch verhindert, dass die einander zugewandten Stirnflächen des ersten und zweiten Rohrkörperelements während der Herstellung des Biegeabschnitts ihren Abstand zueinander verändern können, wobei nach der Herstellung des Biegeabschnitts der Abstand der Stirnflächen zueinander - quer zur Längsachsenrichtung des Rohrkörperelements betrachtet - variiert.

Wesentlich für die Funktion des Kraftfahrzeugrohrleitungselements ist die Bildung eines Pufferabschnitts für Flüssigkeiten im Bereich zwischen der Auslassöffnung des Außenrohres und der Austrittsöffnung des Innenrohrkörpers, welche im Abstand von der Austrittsöffnung angeordnet ist. Nach einer vorteilhaften Ausgestaltung der Erfindung ist dabei vorgesehen, dass das erste Rohrkörperelement eine dem zweiten Rohrkörperelement zugewandte zweite Stirnfläche und eine der Auslassöffnung zugewandte erste Stirnfläche aufweist, wobei die erste Stirnfläche senkrecht zur Innenwand des Innenrohres ausgerichtet ist. Durch diese Ausgestaltung der Erfindung bildet die erste Stirnfläche des ersten Rohrkörperelements eine sich senkrecht zur Innenwand erstreckende Fläche, wodurch sich die Größe des Pufferspeichers in besonders einfacher Weise bestimmen und festlegen lässt. Zudem gewährleistet diese Ausgestaltung der Erfindung die Bildung eines im Wesentlichen zylindrisch ausgebildeten Pufferspeichers, welcher besonders zuverlässig im Bedarfsfall eine ausreichende Versorgung mit im Pufferspeicher angeordneter Flüssigkeit gewährleistet.

Zur Herstellung des Kraftfahrzeugrohrleitungselements wird der Innenrohrkörper vor der Herstellung der Biegung in ein zylindrisches, umgebogenes Rohr eingeführt und an vorbestimmter Stelle platziert. Nach einer besonders vorteilhaften Ausgestaltung der Erfindung ist dabei vorgesehen, dass bei der Verwendung von vorzugsweise zwei Rohrkörperelementen zur Bildung des Innenrohrkörpers die erste und zweite Stirnfläche des ersten Rohrkörperelements und/oder die dritte und vierte Stirnfläche des zweiten Rohrkörperelements vor der Herstellung des Biegeabschnitts senkrecht zur Innenwand des Innenrohres ausgerichtet sind. Diese Ausgestaltung der Erfindung ermöglicht eine besonders exakte Positionierung und Ausrichtung der Rohrkörperelemente zueinander sowie innerhalb des Außenrohres. Darüber hinaus wird bei einer Ausgestaltung der Erfindung, bei der die einander zugewandten Stirnflächen des ersten und zweiten Rohrkörperelements senkrecht zur Innenwand und damit parallel zueinander ausgerichtet sind, in besonders zuverlässiger Weise gewährleistet, dass diese bei der Herstellung des Biegeabschnitts keinen strukturschädigenden Einfluss auf das Außenrohr ausüben.

Besonders vorteilhafterweise ist dabei vorgesehen, dass die zweite Stirnfläche des ersten Rohrkörperelements und die dem ersten Rohrkörperelement zugewandte dritte Stirnfläche des zweiten Rohrkörperelements vor der Herstellung des Biegeabschnitts beabstandet voneinander angeordnet sind. Hierdurch wird in besonders vorteilhafter Weise gewährleistet, dass das erste Rohrkörperelement und das zweite Rohrkörperelement während der Herstellung des Biegeabschnitts und auch nach Herstellung des Biegeabschnitts beabstandet voneinander angeordnet sind, sodass diese keine, ggf. aufgrund eines Zusammenwirkens, strukturschädigenden Auswirkungen auf das Außenrohr ausüben.

Das Kraftfahrzeugrohrleitungselement ist grundsätzlich dazu geeignet, um als Bestandteil einer Flüssigkeitsförderleitung mit weiteren Elementen der Flüssigkeitsförderleitung verbunden zu werden. So kann das Kraftfahrzeugrohrleitungselement bspw. mit geeigneten Verbindungselementen ausgestaltet sein, die eine flüssigkeitsdichte Verbindung mit entsprechenden Anschlusselementen ermöglichen. Auch kann das Rohrleitungselement dazu genutzt werden, um mit einem Abschnitt einer Schlauchleitung verbunden zu werden, wobei hierzu die Schlauchleitung über das Außenrohr geführt wird. Nach einer besonders vorteilhaften Ausgestaltung der Erfindung weist hierzu das Außenrohr im Bereich der Einlassöffnung eine Verjüngung und/oder im Bereich der Auslassöffnung einen umlaufenden Flansch auf. Die vorteilhafterweise vorgesehene Ausgestaltung des Kraftfahrzeugrohrleitungselements mit einem Flansch ermöglicht eine zuverlässige Festlegung des Kraftfahrzeugrohrleitungselements an bspw. einem Kraftfahrzeugabgastrakt, sodass über das Kraftfahrzeugrohrleitungselement dieser mit Reduktionsmitteln versorgt werden kann.

Nach einer vorteilhaften Weiterbildung der Erfindung ist ferner vorgesehen, dass das Außenrohr einen außenseitig umlaufenden Wulst aufweist, der besonders bevorzugt durch plastische Verformung des Außenrohres, insbesondere durch Stauchen des Außenrohres gebildet ist. Ein außenseitig umlaufender Wulst ermöglicht eine besonders zuverlässige Anordnung eines Schlauchelements, wobei dieses insbesondere in Aufschiebrichtung des Schlauchelements hinter dem Wulst formschlüssig arretiert werden kann. Durch den Wulst wird somit die Verbindung eines Schlauchelements mit einem Kraftfahrzeugrohrleitungselement besonders zuverlässig ausgestaltet, wobei die Herstellung des Wulst grundsätzlich in beliebiger Weise erfolgen kann.

So kann der Wulst bspw. durch einen Materialauftrag auf der Außenfläche des Außenrohres gebildet werden. Nach einer besonders vorteilhaften Ausgestaltung der Erfindung ist der Wulst jedoch durch plastische Verformung des Außenrohres, insbesondere durch Stauchen des Außenrohres gebildet. Dies bietet den Vorteil, dass auf eine Verbindung eines separaten Wulstelements mit dem Außenrohr verzichtet werden kann. Auch stellt das Stauchen einen besonders einfachen und kostengünstigen Herstellungsprozess dar. Ein möglicher Nachteil des Stauchprozesses, welcher aufgrund der Verformung zu einer Einschnürung im entsprechenden Bereich an der Innenseite des Außenrohres führt, wird bei dem erfindungsgemäßen Kraftfahrzeugrohrleitungselement zudem dadurch vermieden, dass bei einer geeigneten Ausgestaltung des Innenrohrkörpers die Einschnürung keine Einwirkung auf den Strömungskanal hat, wenn die Stauchung im Bereich des Verbindungsabschnitts des Außenrohres angeordnet ist.

Ein Ausführungsbeispiel der Erfindung wird nachstehend mit Bezug auf die Zeichnungen erläutert. In den Zeichnungen zeigen:
- Fig. 1: eine Ansicht eines Schnitts eines Kraftfahrzeugrohrleitungselements mit zwei einen Innenrohrkörper bildenden Rohrkörperelementen vor der Herstellung eines Biegeabschnitts;
- Fig. 2: eine Ansicht eines Schnitts des Rohrleitungselements von Fig. 1 nach der Herstellung des Biegeabschnitts und
- Fig. 3: eine Ansicht eines Schnitts des Rohrleitungselements von Fig. 1 nach der Herstellung des Biegeabschnitts und Erstellung eines Flansches im Bereich einer Auslassöffnung.

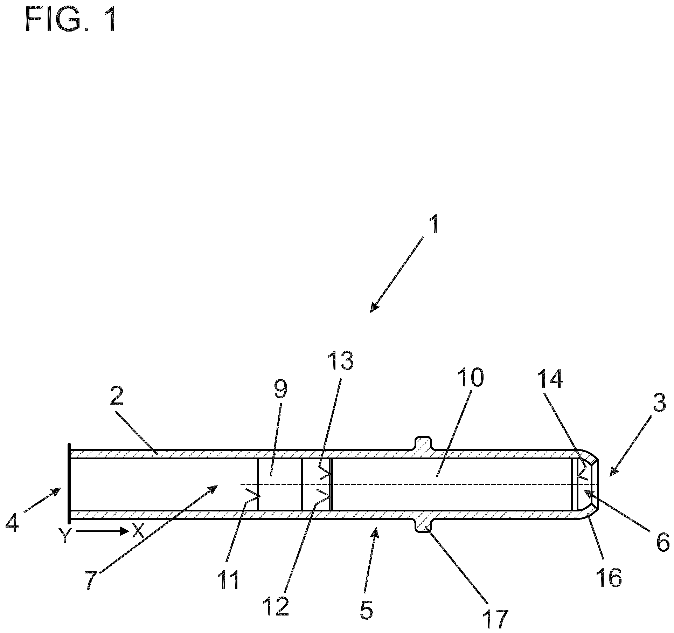

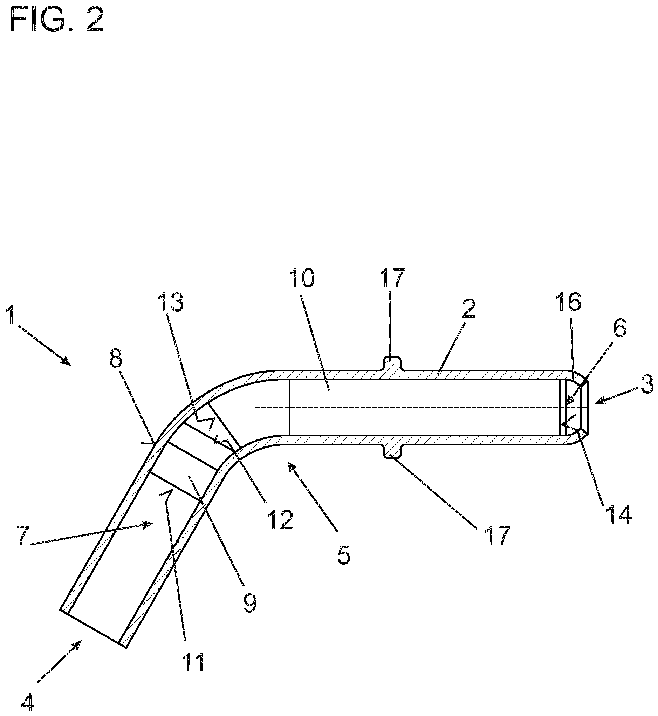

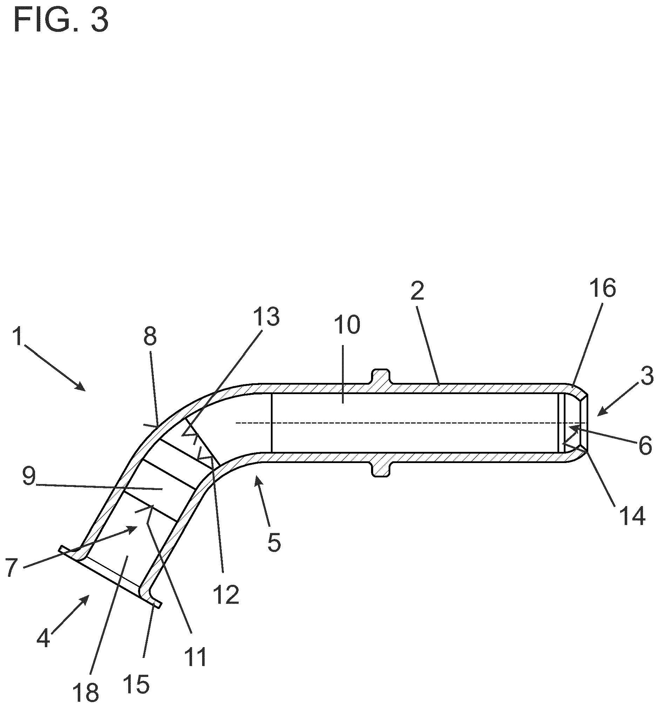

Figur 1 zeigt ein Kraftfahrzeugrohrleitungselement 1 vor der Ausbildung eines Biegeabschnitts 8 (vgl. Figur 2) und der finalen Ausbildung eines Flansches 15 im Bereich einer Auslassöffnung 4 (vgl. Figur 3) zur Bereitstellung eines dem Einsatzzweck angepassten Kraftfahrzeugrohrleitungselements 1. Das Kraftfahrzeugrohrleitungselement 1 ist aus einem Außenrohr 2, das sich von einer Einlassöffnung 3 bis zu einer Auslassöffnung 4 erstreckt und einem aus einem ersten Rohrkörperelement 9 und einem zweiten Rohrkörperelement 10 gebildeten Innenrohrkörper 5 gebildet. Das erste Rohrkörperelement 9 und das zweite Rohrkörperelement 10 sind in das Außenrohr 2 eingeschoben und sind in dem in Figur 1 dargestellten, keinen Biegeabschnitt aufweisenden Bereich im Abstand voneinander angeordnet, sodass der Innenrohrkörper 5 im Bereich zwischen einer zweiten Stirnfläche 12 des ersten Rohrkörperelements 9 und einer dritten Stirnfläche 13 des zweiten Rohrkörperelements 10 eine Lücke aufweist.

Zur Anpassung an den Einsatzzweck des Kraftfahrzeugrohrleitungselements 1 erfährt dieses eine Biegung zur Herstellung eines Biegeabschnitts 8, wobei das erste Rohrkörperelement 9 und das zweite Rohrkörperelement 10 abschnittsweise im Bereich des Biegeabschnitts 8 angeordnet sind. Aufgrund der Beabstandung des ersten Rohrkörperelements 9 und des zweiten Rohrkörperelements 10 im Bereich des Biegeabschnitts 8 üben diese während der Herstellung des Biegeabschnitts 8 keine die Struktur des Außenrohres 2 schwächenden Einflüsse auf das Außenrohr 2 aus. Nach der Herstellung des Biegeabschnitts 8 erfolgt die Ausbildung eines Flansches 15 im Bereich der Auslassöffnung des Außenrohres 2, sodass das Kraftfahrzeugrohrleitungselement 1 mittels des Flanschs 15 zuverlässig an einem zu verbindenden Bauteil angeordnet werden kann.

Im Bereich der Einlassöffnung 3 weist das Außenrohr 2 eine Verjüngung 16 auf, welche die Anordnung eines hier nicht dargestellten Schlauchs ermöglicht, sodass über die Einlassöffnung 3 Flüssigkeit in eine Eintrittsöffnung 6 des mit seiner vierten Stirnfläche 14 im Bereich der Auslassöffnung 4 angeordneten zweiten Rohrkörperelements 10 gelangt. Im Betrieb durchströmt die Flüssigkeit den Innenrohrkörper 5 und tritt aus diesem im Bereich der ersten Stirnfläche 11 aus der Austrittsöffnung 7 aus dem Innenrohrkörper 5 aus. Die Flüssigkeit gelangt dabei aufgrund der beabstandeten Anordnung der ersten Stirnfläche 11 von der Austrittsöffnung 4 in einen Pufferspeicher 18, welcher gegenüber dem Innenrohrkörper 5 einen größeren, nämlich durch die Innenwand des Außenrohres 2 gebildeten Querschnitt aufweist.

Zur Erleichterung der Montage und Festlegung eines hier nicht dargestellten Schlauchs an den Kraftfahrzeugrohrleitungselement 1 weist das Außenrohr 2 ferner ein durch Stauchen gebildeten Wulst 17 auf, an dem ein Schlauch an dem Kraftfahrzeugrohrleitungselement 1 festgelegt werden kann.

### Bezugszeichenliste

- 1: Kraftfahrzeugrohrleitungselement
- 2: Außenrohr
- 3: Einlassöffnung
- 4: Auslassöffnung
- 5: Innenrohrkörper
- 6: Eintrittsöffnung
- 7: Austrittsöffnung
- 8: Biegeabschnitt
- 9: erstes Rohrkörperelement
- 10: zweites Rohrkörperelement
- 11: erste Stirnfläche
- 12: zweite Stirnfläche
- 13: dritte Stirnfläche
- 14: vierte Stirnfläche
- 15: Flansch
- 16: Verjüngung
- 17: Wulst
- 18: Pufferspeicher

## Patentansprüche

1. Kraftfahrzeugrohrleitungselement für Flüssigkeitsleitungen, insbesondere zur Durchleitung von Reduktionsmitteln in einen Kraftfahrzeugsabgastrakt, mit
- einem sich von einer Einlassöffnung (3) bis zu einer Auslassöffnung (4) erstreckenden Außenrohr (2),
- einem innerhalb des Außenrohrs (2) angeordneten, sich von einer Eintrittsöffnung (6) bis zu einer im Abstand von der Auslassöffnung (4) angeordneten Austrittsöffnung (7) erstreckenden Innenrohrkörper (5) und
- einem sich über einen Bereich des Innenrohrkörpers (5) und des Außenrohrs (2) erstreckenden Biegeabschnitt (8),
**dadurch gekennzeichnet, dass**
der Innenrohrkörper (5) in Längsachsenrichtung im Bereich des Biegeabschnitts (8) mehrteilig ausgebildet ist.

2. Kraftfahrzeugrohrleitungselement nach Anspruch 1, **dadurch gekennzeichnet, dass** der Innenrohrkörper (5) ein erstes Rohrkörperelement (9) und ein zweites Rohrkörperelement (10) aufweist, die im Biegeabschnitt (8) abschnittsweise beabstandet zueinander angeordnet sind.

3. Kraftfahrzeugrohrleitungselement nach Anspruch 1 oder 2, **dadurch gekennzeichnet, dass** das erste Rohrkörperelement (9) eine dem zweiten Rohrkörperelement (10) zugewandte zweite Stirnfläche (12) und eine der Auslassöffnung (4) zugewandte erste Stirnfläche (11) aufweist, die senkrecht zur Innenwand des Außenrohres (2) ausgerichtet ist.

4. Kraftfahrzeugrohrleitungselement nach einem oder mehreren der vorhergehenden Ansprüche, **dadurch gekennzeichnet, dass** die erste und zweite Stirnfläche (11,12) des ersten Rohrkörperelements (9) und/oder eine dritte und vierte Stirnfläche (13, 14) des zweiten Rohrkörperelements (10) vor der Herstellung des Biegeabschnitts (8) senkrecht zur Innenwand des Außenrohres (2) ausgerichtet sind.

5. Kraftfahrzeugrohrleitungselement nach einem oder mehreren der vorhergehenden Ansprüche, **dadurch gekennzeichnet, dass** die zweite Stirnfläche (12) des ersten Rohrkörperelements (9) und die dem ersten Rohrkörperelement (9) zugewandte dritte Stirnfläche (13) des zweiten Rohrkörperelements (10) vor der Herstellung des Biegeabschnitts (8) beabstandet voneinander angeordnet sind.

6. Kraftfahrzeugrohrleitungselement nach einem oder mehreren der vorhergehenden Ansprüche, **dadurch gekennzeichnet, dass** das Außenrohr (2) im Bereich der Einlassöffnung (3) verjüngt und/oder im Bereich der Auslassöffnung (4) einen umlaufenden Flansch (15) aufweist.

7. Kraftfahrzeugrohrleitungselement nach einem oder mehreren der vorhergehenden Ansprüche, **dadurch gekennzeichnet, dass** das Außenrohr (2) einen außenseitig umlaufenden Wulst (17) aufweist, der besonders bevorzugt durch plastische Verformung des Außenrohres (2), insbesondere durch Stauchen des Außenrohres (2) gebildet ist.

## Geänderte Patentansprüche

### Geänderte Patentansprüche gemäss Regel 137(2) EPÜ.

1. Kraftfahrzeugrohrleitungselement für Flüssigkeitsleitungen, insbesondere zur Durchleitung von Reduktionsmitteln in einen Kraftfahrzeugsabgastrakt, mit
- einem sich von einer Einlassöffnung (3) bis zu einer Auslassöffnung (4) erstreckenden Außenrohr (2),
- einem innerhalb des Außenrohrs (2) angeordneten, sich von einer Eintrittsöffnung (6) bis zu einer im Abstand von der Auslassöffnung (4) angeordneten Austrittsöffnung (7) erstreckenden Innenrohrkörper (5) und
- einem sich über einen Bereich des Innenrohrkörpers (5) und des Außenrohrs (2) erstreckenden Biegeabschnitt (8),
**dadurch gekennzeichnet, dass**
der Innenrohrkörper (5) in Längsachsenrichtung im Bereich des Biegeabschnitts (8) mehrteilig ausgebildet ist.

2. Kraftfahrzeugrohrleitungselement nach Anspruch 1, **dadurch gekennzeichnet, dass** der Innenrohrkörper (5) ein erstes Rohrkörperelement (9) und ein zweites Rohrkörperelement (10) aufweist, die im Biegeabschnitt (8) abschnittsweise beabstandet zueinander angeordnet sind.

3. Kraftfahrzeugrohrleitungselement nach Anspruch 2, **dadurch gekennzeichnet, dass** das erste Rohrkörperelement (9) eine dem zweiten Rohrkörperelement (10) zugewandte zweite Stirnfläche (12) und eine der Auslassöffnung (4) zugewandte erste Stirnfläche (11) aufweist, die senkrecht zur Innenwand des Außenrohres (2) ausgerichtet ist.

4. Kraftfahrzeugrohrleitungselement nach Anspruch 3, **dadurch gekennzeichnet, dass** die erste und zweite Stirnfläche (11, 12) des ersten Rohrkörperelements (9) und/oder eine dritte und vierte Stirnfläche (13, 14) des zweiten Rohrkörperelements (10) vor der Herstellung des Biegeabschnitts (8) senkrecht zur Innenwand des Außenrohres (2) ausgerichtet sind.

5. Kraftfahrzeugrohrleitungselement nach einem oder mehreren der Ansprüche 3 oder **4, dadurch gekennzeichnet, dass** die zweite Stirnfläche (12) des ersten Rohrkörperelements (9) und die dem ersten Rohrkörperelement (9) zugewandte dritte Stirnfläche (13) des zweiten Rohrkörperelements (10) vor der Herstellung des Biegeabschnitts (8) beabstandet voneinander angeordnet sind.

6. Kraftfahrzeugrohrleitungselement nach einem oder mehreren der vorhergehenden Ansprüche, **dadurch gekennzeichnet, dass** das Außenrohr (2) im Bereich der Einlassöffnung (3) verjüngt und/oder im Bereich der Auslassöffnung (4) einen umlaufenden Flansch (15) aufweist.

7. Kraftfahrzeugrohrleitungselement nach einem oder mehreren der vorhergehenden Ansprüche, **dadurch gekennzeichnet, dass** das Außenrohr (2) einen außenseitig umlaufenden Wulst (17) aufweist, der besonders bevorzugt durch plastische Verformung des Außenrohres (2), insbesondere durch Stauchen des Außenrohres (2) gebildet ist.
